# EUROPÄISCHE PATENTSCHRIFT

(11) **EP 0 972 965 B1**
(45) Veröffentlichungstag und Bekanntmachung des Hinweises auf die Patenterteilung: **09.10.2002**
(21) Anmeldenummer: 99109173.7
(22) Anmeldetag: 10.05.1999
(51) Int. Cl.: F16F 15/14

(54) **Drehzahladaptiver Schwingungstilger**
Rotational speed adaptive damper
Amortisseur adaptatif de vélocité rotative

(30) Priorität: 11.07.1998 DE 19831154
(43) Veröffentlichungstag der Anmeldung: 19.01.2000
(73) Patentinhaber: Carl Freudenberg KG, 69469 Weinheim (DE)
(72) Erfinder: Eckel, Hans-Gerd Dr., 69514 Laudenbach (DE); Kunkel, Anja, 69483 Siedelsbrunn (DE)

(56) Entgegenhaltungen:
- DE-A- 4 427 636
- DE-A- 19 654 915
- DE-C- 727 378
- DE-C- 4 238 683
- DE-C- 19 604 160
- DE-C- 19 631 989

## Beschreibung

### Technisches Gebiet

Die Erfindung betrifft einen drehzahladaptiven Schwingungstilger für eine um eine Achse rotierbare Welle, umfassend ein Nabenteil, auf dem eine Anzahl in Umfangsrichtung benachbarter Trägheitsmassenelemente jeweils in zwei in Umfangsrichtung benachbarten Halterungen gelagert ist, die auf gegensinnig gekrümmten Kurvenbahnen der Trägheitsmassenelemente und des Nabenteils derart abwälzbare Bolzen umfassen, daß sich bei Einleitung von eine Rotationsbewegung überlagernden Drehschwingungen eine Verringerung des Abstandes der Trägheitsmassenelemente von der Achse im Zuge von gekrümmten Bewegungsbahnen ergibt, wobei die Trägheitsmassenelemente in zumindest einer ringförmigen Kammer des Nabenteils eingeschlossen sind, in der ein Schmiermittel aufnehmbar ist.

### Stand der Technik

Ein solcher drehzahladaptiver Schwingungstilger ist aus der DE 196 31 989 C1 bekannt

An Wellen von periodisch arbeitenden Maschinen, bspw. an der Kurbelwelle einer Verbrennungskraftmaschine treten die Rotationsbewegung überlagernde Drehschwingungen auf, deren Frequenz sich mit der Drehzahl der Welle verändert. Zur Verringerung dieser Drehschwingungen können Schwingungstilger vorgesehen werden. Diese werden als drehzahladaptiv bezeichnet, wenn sie Drehschwingungen über einen größeren Drehzahlbereich, idealerweise über den gesamten Drehzahlbereich der Maschine tilgen können.

Den Drehschwingungstilgern liegt das Prinzip zugrunde, daß die Trägheitsmassen fliehkraftbedingt bestrebt sind, die Achse bei Einleitung einer Drehbewegung im größtmöglichen Abstand zu umkreisen. Drehschwingungen, welche die Drehbewegung überlagern, führen zu einer zwangserregten Relativbewegung der Trägheitsmassenelemente, wobei die Trägheitsmassenelemente in radialer Richtung nach innen bewegt werden. Der Schwingungstilger hat eine der Drehzahl proportionale Eigenfrequenz, so daß Drehschwingungen mit den gleichen drehzahlabhängigen Frequenzen über einen großen Drehzahlbereich tilgbar sind. Nachteil des bekannten drehzahladaptiven Schwingungstilgers ist jedoch, daß aufgrund von Verschleiß an den beweglichen Teilen nicht die gewünschte hohe Lebensdauer erreicht wird.

### Darstellung der Erfindung

Die der Erfindung zugrunde liegende Aufgabe besteht darin, einen bekannten drehzahladaptiven Schwingungstilger derart weiterzubilden, daß eine besonders hohe Lebensdauer und Betriebssicherheit erzielt werden kann.

Diese Aufgabe wird bei einem drehzahladaptiven Schwingungstilger der eingangs genannten Art dadurch gelöst, daß zumindest ein Durchlaß in wenigstens einem der Trägheitsmassenelemente vorgesehen ist, der das Schmiermittel zu den Kurvenbahnen hinführt.

Auf diese Weise wird erreicht, daß der Bolzen und die Kurvenbahnen der Trägheitsmassenelemente und des Nabenteils auf denen der Bolzen abrollt zur Vermeidung von Verschleiß hinreichend geschmiert werden können. Von Vorteil ist dabei, daß durch diese erfindungsgemäße Gestaltung eine gute Schmierung erreicht wird, ohne die Schwingungstilgungsfunktion zu beeinträchtigen.

Vorteilhafterweise ist vorgesehen, daß die Kammer zu einem geringen Teil mit dem Schmiermittel angefüllt ist. Fliehkraftbedingt verteilt sich das Schmiermittel bei einer Rotationsbewegung entlang des Umfangs des Nabenteils und gelangt durch den zumindest einen Durchlaß zu den Kurvenbahnen bzw. dem Bolzen, ohne die Bewegung der Trägheitsmassenelemente erheblich zu dämpfen.

Die Herstellung des drehzahladaptiven Schwingungstilgers wird dadurch vereinfacht, daß der zumindest eine Durchlaß zu einer benachbarten Stirnfläche eines der Trägheitsmassenelemente hin offen ist.

In Weiterbildung dieses Erfindungsgedanken kann vorgesehen werden, daß der Durchlaß von einer dichtend benachbarten Wand der Kammer oder des Nabenteils überdeckt ist.

Indem der Durchlaß kanalartig gestaltet ist, wird das Schmiermittel besonders gut zu den Schmierstellen geführt.

Gemäß einer besonders vorteilhaften Ausgestaltung der Erfindung ist vorgesehen, daß der zumindest eine Durchlaß die äußere Oberfläche des wenigstens einen Trägheitsmassenelements unter einem spitzen Winkel durchbricht. Hierdurch wird erreicht, daß bei einer Bewegung des Trägheitsmassenelements entlang der gekrümmten Bewegungsbahnen das Schmiermittel in einer Art Schöpfbewegung in den Durchlaß eingepreßt wird.

Die Herstellung der Trägheitsmassenelemente wird dadurch besonders vereinfacht, daß der zumindest eine Durchlaß die äußere Oberfläche des wenigstens einen Trägheitsmassenelements unter einem rechten Winkel durchbricht.

Die Schmierung von Bolzen und Kurvenbahnen kann dadurch weiter verbessert werden, daß das wenigstens eine Trägheitsmassenelement zwei Durchlässe aufweist und symmetrisch gestaltet ist bezüglich einer gedachten Ebene, die eine die Enden des Trägheitsmassenelements verbindende Linie in der Mitte senkrecht durchschneidet.

Vorteilhafterweise ist weiterhin vorgesehen, daß die äußere Oberfläche mit einem kleineren Radius gewölbt ist als die ihr gegenüberliegende Wandung der Kammer. Dadurch wird der Transport von Schmiermittel in den Durchlaß verbessert.

Weiterhin kann vorgesehen werden, daß die äußeren Mündungsöffnungen der Durchlaßkanäle an den Stellen höchsten Schmiermitteldrucks angeordnet sind. Durch die Bewegung der Trägheitsmassenelemente relativ zu dem Schmiermittel baut sich in diesem ein Schmiermitteldruck auf, der auf vorteilhafte Weise dafür verwendet werden kann, um das Schmiermittel zu den Kurvenbahnen zu fördern.

Eine weitere vorteilhafte Ausgestaltung der Erfindung sieht vor, daß das wenigstens eine Trägheitsmassenelement mit einem Hauptkanal in der Mitte und zwei von dem Hauptkanal abzweigenden, zu den Kurvenbahnen führenden Nebenkanälen versehen ist.

Eine kompakte Bauweise ergibt sich dadurch, daß dem Nabenteil Trägheitsmassenelemente axial beiderseits benachbart sind.

Indem das Nabenteil die Trägheitsmassenelemente axial beiderseits umschließt wird die Herstellung des Schwingungstilgers vereinfacht.

Insbesondere die Herstellungskosten können dadurch verringert werden, daß das Nabenteil im wesentlichen aus tiefgezogenen Blechteilen besteht.

### Kurzbeschreibung der Zeichnungen

Der Gegenstand der Erfindung wird nachfolgend anhand der Zeichnungen weiter verdeutlicht. Es zeigen:
- **Fig. 1**: eine Ansicht eines drehzahladaptiven Schwingungstilgers von vorn,
- **Fig. 2**: einen Querschnitt durch einen drehzahladaptiven Schwingungstilger,
- **Fig. 3**: eine Draufsicht auf ein Trägheitsmassenelement nach einer ersten Ausführungsform,
- **Fig. 4**: einen Querschnitt durch das Trägheitsmassenelement aus Figur 3,
- **Fig. 5**: eine vergrößerte Darstellung eines Details aus Figur 4, und
- **Fig. 6**: einen Längsschnitt durch ein Trägheitsmassenelement nach einer zweiten Ausführungsform.

### Ausführung der Erfindung

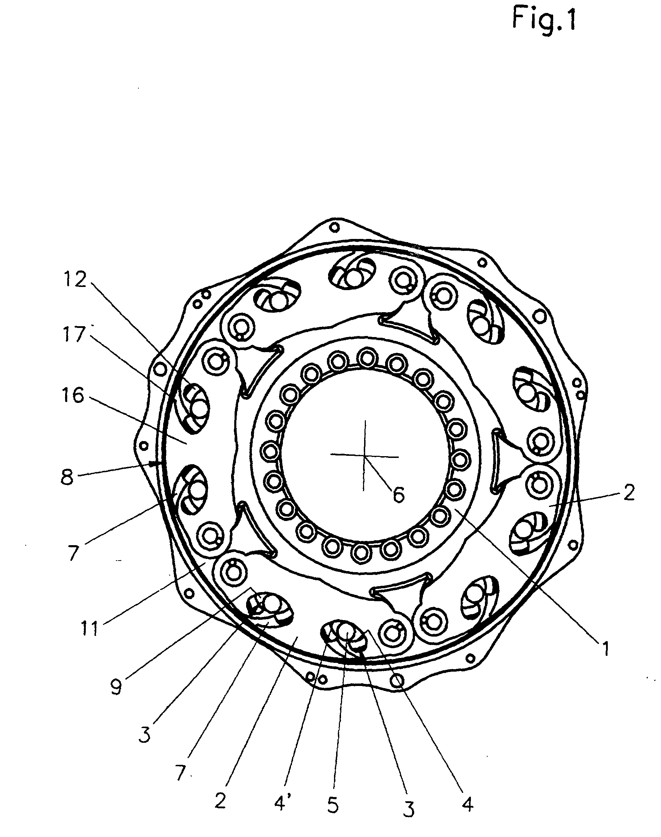

Figur 1 zeigt einen drehzahladaptiven Schwingungstilger für eine um eine Achse 6 rotierbare Welle (nicht dargestellt), der ein Nabenteil 1 und eine Anzahl in Umfangsrichtung benachbarter Trägheitsmassenelemente 2 aufweist. Das Nabenteil 1 weist für jedes Trägheitsmassenelement 2 jeweils zwei in Umfangsrichtung benachbarte Halterungen 3 auf, um die Trägheitsmassenelemente 2 auf dem Nabenteil 1 zu lagern.

Jede Halterung 3 wird durch eine Ausnehmung 9 in dem Nabenteil 1 und einen darin aufgenommenen Bolzen 5 gebildet. Dabei erstreckt sich der Bolzen 5, dessen Längsachse parallel zur Achse 6 des Nabenteils 1 verläuft, in eine insbesondere als Durchbruch ausgebildete Ausnehmung 12 im Trägheitsmassenelement 2.

Das Nabenteil 1 weist eine die Ausnehmung 9 begrenzende Kurvenbahn 4 auf, und das Trägheitsmassenelement 2 weist eine die Ausnehmung 12 begrenzende Kurvenbahn 4' auf. Die Kurvenbahnen 4, 4' und der Bolzen 5 sind derart ausgebildet und angeordnet, daß sich die Trägheitsmassenelemente 2 relativ zu dem Nabenteil unter Ausführung einer Pendelbewegung verschieben können. Dabei wälzt der Bolzen 5 auf den Kurvenbahnen 4, 4' ab, welche gegensinnig gekrümmt sind. Die Kuvenbahn 4 im Nabenteil weist dabei in Richtung der Achse 6, während die Kurvenbahn 4' im Trägheitsmassenelement 2 nach außen, von der Achse 6 weg weist.

Bei Auftreten einer eine Rotationsbewegung überlagernden Drehschwingung werden die Trägheitsmassenelemente 2 aus ihrer in Figur 1 dargestellten Mittelposition relativ zum Nabenteil 1 entlang einer gekrümmten Bewegungsbahn bewegt, welche durch die Führungsbahnen 4, 4' und den Bolzen 5 bestimmt ist. Auf diese Weise kommt es zu einer Verringerung des Abstandes der Trägheitsmassenelemente 2 von der Achse 6, wodurch Drehschwingungen aufgrund des Tilgungsprinzipes entgegengewirkt wird.

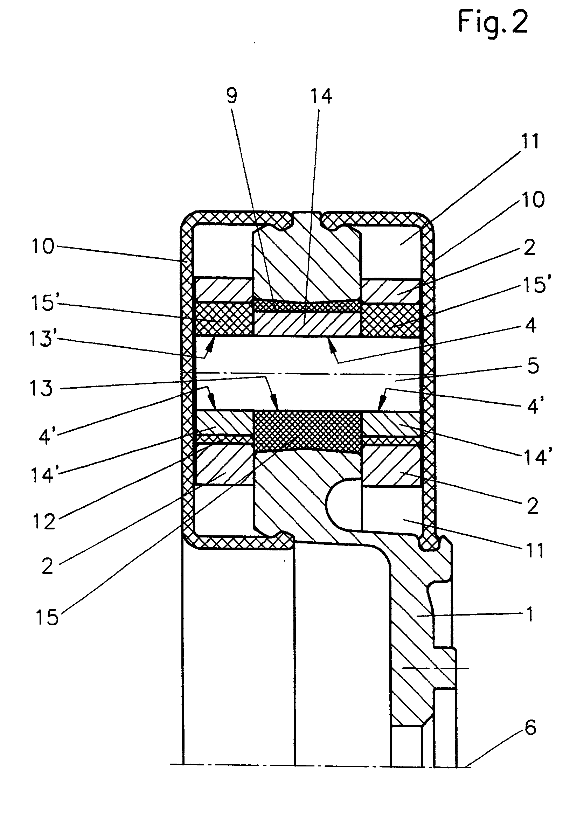

Die Trägheitsmassenelemente 2 weisen darüberhinaus in der Ausnehmung 12 den Kurvenbahnen 4' gegenüberliegende Führungsbahnen 13' auf, so daß die Ausnehmung 12 die Form eines U erhält, welches von der Achse 6 weggerichtet ist. Entsprechende Führungsbahnen 13 sind auch in der Halterung 3 des Nabenteils 1 ausgebildet (vgl. Figur 2).

Der in Figur 2 dargestellte Querschnitt entlang der Achse 6 verdeutlicht die Anordnung und Lagerung der Trägheitsmassenelemente 2 an der Nabe 1. Bei der in Figur 2 dargestellten Ausführungsform sind die Trägheitsmassenelemente 2 paarweise axial beidseitig dem Nabenteil benachbart angeordnet. Es ist jedoch auch möglich, die Trägheitsmassenelemente 2 so anzuordnen, daß das Nabenteil 1 diese axial beiderseits umschließt.

Die Kurvenbahnen 4, 4' und die Führungsbahnen 13, 13' bilden Bestandteile von Einsatzteilen 14, 14', die in Ausnehmungen 9 bzw. 12 des Nabenteils 1 und der Trägheitsmassenelemente 2 unverlierbar aufgenommen sind. Die Einsatzstücke 14, 14' können auch zunächst lose in die Ausnehmungen 9 bzw. 12 eingefügt und durch nachträgliches Einformen der die Führungsbahnen 13, 13' tragenden Schicht 15 bzw. 15' mit den Ausnehmungen 9 bzw. 12 und den Einsatzteilen 14, 14' verklebt sein.

Der die Halterungen 3 aufweisende Nabenteil 1 wird durch gegenüber dem Nabenteil 1 abgedichtete Kappen 10 umschlossen, so daß eine Kammer 11 entsteht. Diese ist zu einem geringen Teil mit einem Schmiermittel angefüllt. Als Schmiermittel kommen insbesondere Schmierflüssigkeiten, zum Beispiel Schmieröle oder Schmierfette in Betracht.

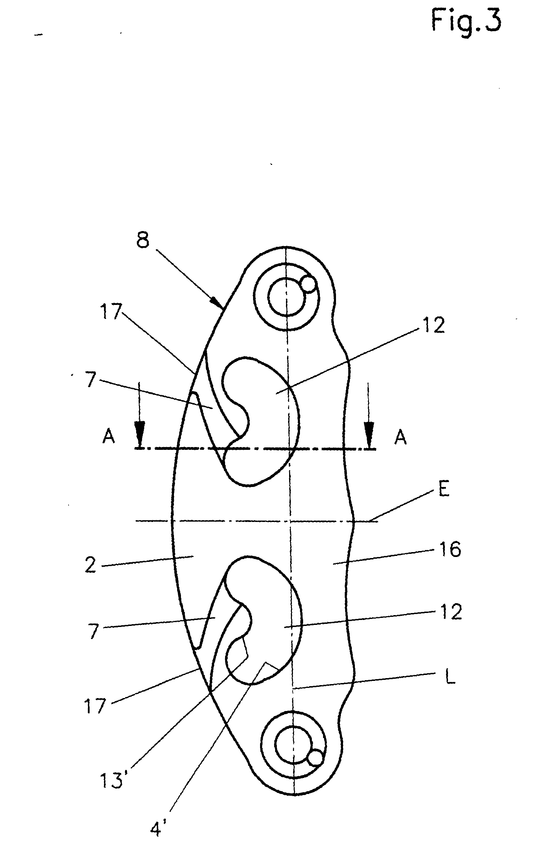

Figur 3 zeigt ein erfindungsgemäßes Trägheitsmassenelement 2, in dem zwei Ausnehmungen 12 für die Bolzen 5 vorgesehen sind. Durchlässe 7 erstrecken sich von der äußeren Oberfläche 8 des Trägheitsmassenelements 2 zu den Ausnehmungen 12. Die Durchlässe 7 führen das Schmiermittel zu den Bolzen 5 und somit zu den Kurvenbahnen 4' des Trägheitsmassenelements 2 und den Kurvenbahnen 4 des Nabenelements 1 hin, um eine ausreichende Schmierung in diesem Bereich sicherzustellen. Der Durchlaß 7 ist zu der benachbarten Stirnfläche 16 des Trägheitsmassenelements 2 hin offen ausgebildet. Er wird im eingebauten Zustand von einer dichtend benachbarten Wand der Kammer 11 oder des Nabenteils 1 überdeckt. Der Durchlaß 7 ist kanalartig ausgebildet und so angeordnet, daß er die in radialer Richtung äußere Oberfläche 8 des Trägheitsmassenelements 2 unter einem spitzen Winkel durchbricht. Diese Ausgestaltung ermöglicht es, daß bei einer Relativbewegung des Trägheitsmassenelements 2 zu dem Nabenteil 1 Schmiermittel durch eine Art Schöpfvorgang in den Durchlaß 7 gedrückt und dadurch zu den Kurvenbahnen 4, 4' transportiert wird. Der Transport des Schmiermittels wird dadurch weiter verbessert, daß die äußere Oberfläche 8 mit einem kleineren Radius gewölbt ist als die ihr gegenüberliegende Wandung der Kammer 11 (vgl. auch Figur 1). Zudem werden die Mündungsöffnungen 17 der Durchlässe 7 an den Stellen angeordnet, an denen der höchste Schmiermitteldruck herrscht, wenn sich die Trägheitsmassenelemente 2 relativ zu dem Nabenteil bewegen. Das Trägheitsmassenelement 2 ist darüberhinaus symmetrisch gestaltet bezüglich einer gedachten Ebene E, die eine die Enden des Trägheitsmassenelements 2 verbindende Linie L in der Mitte senkrecht durchschneidet.

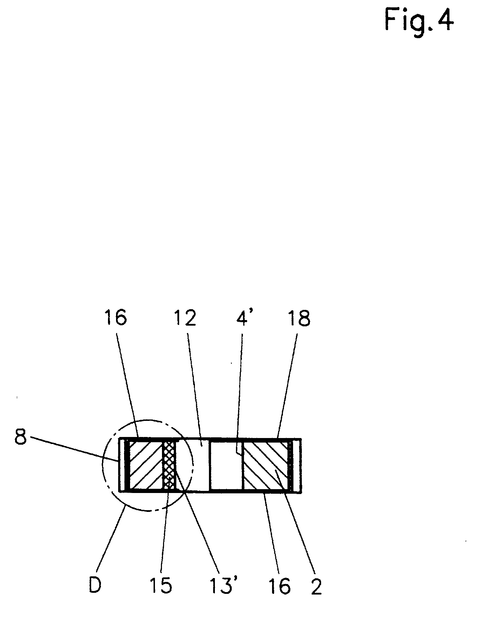

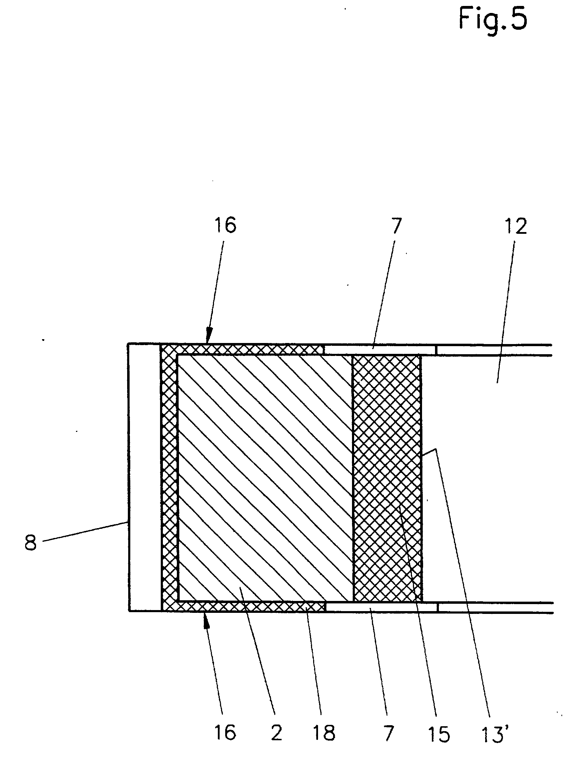

In Figuren 4 und 5 ist ein Schnitt durch das Trägheitsmassenelement aus Figur 2 entlang der Linie A-A dargestellt, wobei in Figur 5 das Detail D aus Figur 4 vergrößert dargestellt ist. Das Trägheitsmassenelement 2 weist eine äußere Schicht 18 auf, welche das Trägheitsmassenelement 2 nahezu vollständig umhüllt. In der Umhüllung 18 sind die Durchlässe 7 ausgebildet, welche auf diese Weise besonders einfach hergestellt werden können. Die äußere Schicht 18 kann auch in die Schicht 15, welche die Führungsbahnen 13' trägt, übergehen und in einem Arbeitsgang mit dieser hergestellt werden. Die Schicht 15 und die äußere Schicht 18 können aus polymerem Werkstoff, beispielsweise aus Gummi gebildet werden, wodurch gleichzeitig ein Dämpfungseffekt erzielt werden kann.

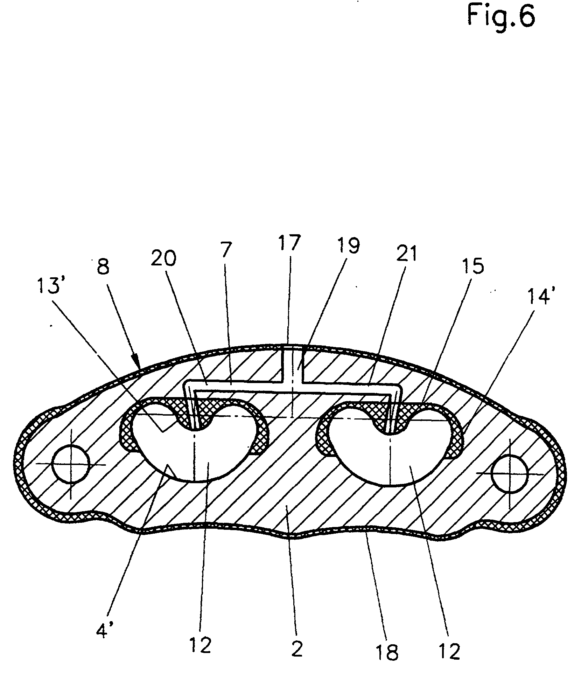

Figur 6 zeigt eine weitere Ausführungsform eines erfindungsgemäßen Trägheitsmassenelements 2 in einer Schnittdarstellung. Der Durchlaß 7 ist kanalartig in dem Trägheitsmassenelement 2 ausgebildet. Er weist einen Hauptkanal 19 in der Mitte und zwei von dem Hauptkanal 19 abzweigende, zu den Ausnehmungen 12 führende Nebenkanäle 20, 21 auf. Dabei durchbricht der den Hauptkanal 19 bildende Abschnitt des Durchlasses 7 die äußere Oberfläche 8 des Trägheitsmassenelements 2 unter einem rechten Winkel.

## Patentansprüche

1. Drehzahladaptiver Schwingungstilger für eine um eine Achse (6) rotierbare Welle, umfassend ein Nabenteil (1), auf dem eine Anzahl in Umfangsrichtung benachbarter Trägheitsmassenelemente (2) jeweils in zwei in Umfangsrichtung benachbarten Halterungen (3) gelagert ist, die auf gegensinnig gekrümmten Kurvenbahnen (4, 4') der Trägheitsmassenelemente (2) und des Nabenteils (1) derart abwälzbare Bolzen (5) umfassen, daß sich bei Einleitung von eine Rotationsbewegung überlagernden Drehschwingungen eine Verringerung des Abstandes der Trägheitsmassenelemente (2) von der Achse (6) im Zuge von gekrümmten Bewegungsbahnen ergibt, wobei die Trägheitsmassenelemente (2) in zumindest einer ringförmigen Kammer (11) des Nabenteils eingeschlossen sind, in der ein Schmiermittel aufnehmbar ist, **dadurch gekennzeichnet, daß** jeweils zumindest ein Durchlaß (7) in wenigstens einem der Trägheitsmassenelemente (2) vorgesehen ist, der das Schmiermittel zu den Kurvenbahnen (4) hinführt.

2. Schwingungstilger nach Anspruch 1 **dadurch gekennzeichnet, daß** die Kammer (11) zu einem geringen Teil mit dem Schmiermittel angefüllt ist.

3. Schwingungstilger nach Anspruch 1 oder 2, **dadurch gekennzeichnet, daß** der zumindest eine Durchlaß (7) in Richtung von zumindest einer Stirnfläche (16) offen ist.

4. Schwingungstilger nach Anspruch 3, **dadurch gekennzeichnet, daß** der zumindest eine Durchlaß (7) von einer dichtend benachbarten Wand der Kammer (11) oder des Nabenteils (1) überdeckt ist.

5. Schwingungstilger nach einem der Anspruch 1 bis 4, **dadurch gekennzeichnet, daß** der Durchlaß (7) kanalartig gestaltet ist.

6. Schwingungstilger nach einem der Ansprüche 1 bis 5, **dadurch gekennzeichnet, daß** der zumindest eine Durchlaß (7) die in radialer Richtung äußere Oberfläche (8) des wenigstens einen Trägheitsmassenelements (2) unter einem spitzen Winkel durchbricht.

7. Schwingungstilger nach einem der Ansprüche 1 bis 5, **dadurch gekennzeichnet, daß** der zumindest eine Durchlaß (7) die in radialer Richtung äußere Oberfläche (8) des wenigstens einen Trägheitsmassenelements (2) unter einem rechten Winkel durchbricht.

8. Schwingungstilger nach einem der Ansprüche 1 bis 7, **dadurch gekennzeichnet, daß** das zumindest eine Trägheitsmassenelement (2) zwei Durchlässe (7) aufweist und symmetrisch gestaltet ist bezüglich einer gedachten Ebene (E), die eine die Enden des Trägheitselements (2) verbindende Linie (L) in der Mitte senkrecht durchschneidet.

9. Schwingungstilger nach einem der Ansprüche 1 bis 8, **dadurch gekennzeichnet, daß** die äußere Oberfläche (8) mit einem kleineren Radius gewölbt ist als die ihr gegenüberliegende Wandung der Kammer (11).

10. Schwingungstilger nach einem der Ansprüche 1 bis 9, **dadurch gekennzeichnet, daß** die äußeren Mündungsöffnungen (17) der Durchlaßkanäle (7) an den Stellen höchsten Schmiermitteldrucks angeordnet sind.

11. Schwingungstilger nach einem der Ansprüche 1 bis 10, **dadurch gekennzeichnet, daß** das wenigstens eine Trägheitsmassenelement (2) mit einem Hauptkanal (19) in der Mitte und zwei vom Hauptkanal (19) abzweigenden, zu den Ausnehmungen (12) führenden Nebenkanälen (20, 21) versehen ist.

12. Schwingungstilger nach einem der Ansprüche 1 bis 11, **dadurch gekennzeichnet, daß** dem Nabenteil (1) Trägheitsmassenelemente (2) achsial beiderseits benachbart sind.

13. Schwingungstilger nach einem der Ansprüche 1 bis 11, **dadurch gekennzeichnet, daß** das Nabenteil (1) die Trägheitsmassenelemente (2) achsial beiderseits umschließt.

14. Schwingungstilger nach Anspruch 13, **dadurch gekennzeichnet, daß** das Nabenteil (1) im wesentlichen aus tiefgezogenen Blechteilen besteht.

## Claims

1. A speed-adaptive vibration damper for a shaft rotatable about an axis (6), comprising a hub part (1) on which a number of inertia mass elements (2) adjacent in the circumferential direction are each mounted in two holders (3) which are adjacent in the circumferential direction and which comprise pins (5) which can roll on curved tracks (4, 4'), curved in opposite directions, of the inertia mass elements (2) and of the hub part (1) in such a way that, when torsional vibrations superimposed on a rotational movement are initiated, the distance of the inertia mass elements (2) from the axis (6) is reduced in the course of curved paths of movement, the inertia mass elements (2) being enclosed in at least one annular chamber (11) of the hub part, in which annular chamber (11) a lubricant can be accommodated, **characterized in that** in each case at least one passage (7) is provided in at least one of the inertia mass elements (2), and this passage (7) directs the lubricant towards the curved tracks (4).

2. A vibration damper according to claim 1, **characterized in that** a small proportion of the chamber (11) is filled with the lubricant.

3. A vibration damper according to either of claims 1 and 2, **characterized in that** the at least one passage (7) is open in the direction of at least one end face (16).

4. A vibration damper according to claim 3, **characterized in that** the at least one passage (7) is covered by a wall of the chamber (11) or of the hub part (1), this wall being in an adjacent position in a sealing manner.

5. A vibration damper according to any one of claims 1 to 4, **characterized in that** the passage (7) is of channel-like design.

6. A vibration damper according to any one of claims 1 to 5, **characterized in that** the at least one passage (7) pierces at an acute angle that surface (8) of the at least one inertia mass element (2) which is the outer surface in the radial direction.

7. A vibration damper according to any one of claims 1 to 5, **characterized in that** the at least one passage (7) pierces at a right angle that surface (8) of the at least one inertia mass element (2) which is the outer surface in the radial direction.

8. A vibration damper according to any one of claims 1 to 7, **characterized in that** the at least one inertia mass element (2) has two passages (7) and is designed symmetrically with regard to an imaginary plane (E), which perpendicularly intersects in the middle a line (L) connecting the ends of the inertia mass element (2).

9. A vibration damper according to any one of claims 1 to 8, **characterized in that** the outer surface (8) is arched with a smaller radius than that wall of the chamber (11) which is opposite it.

10. A vibration damper according to any one of claims 1 to 9, **characterized in that** the outer orifices (17) of the passages (7) are arranged at the points of maximum lubricant pressure.

11. A vibration damper according to any one of claims 1 to 10, **characterized in that** the at least one inertia mass element (2) is provided with a main channel (19) in the middle and two secondary channels (20, 21) branching off from the main channel (19) and leading to the apertures (12).

12. A vibration damper according to any one of claims 1 to 11, **characterized in that** inertia mass elements (2) are axially adjacent to the hub part (1) on both sides.

13. A vibration damper according to any one of claims 1 to 11, **characterized in that** the hub part (1) axially encloses the inertia mass elements (2) on both sides.

14. A vibration damper according to claim 13, **characterized in that** the hub part (1) essentially comprises deep-drawn sheet-metal parts.

## Revendications

1. Amortisseur s'adaptant à la vitesse de rotation pour un arbre mobile autour d'un axe (6), comprenant un moyeu (1) sur lequel une quantité d'éléments à masse inerte (2) adjacents dans le sens circonférentiel sont placés chacun dans deux supports (3) adjacents dans le sens circonférentiel, supports qui comprennent des boulons (5) susceptibles de rouler de telle manière sur des trajectoires courbes (4, 4') de sens inverse des éléments à masse inerte (2) et du moyeu (1) que l'on obtient, en cas d'introduction de vibrations torsionnelles se superposant à un mouvement de rotation, une diminution de la distance entre les éléments à masse inerte (2) et l'axe (5) sur des trajectoires courbes de mouvement, les éléments à masse inerte (2) étant enfermés dans au moins une chambre (11) en forme d'anneau du moyeu, qui peut contenir un lubrifiant, **caractérisé en ce qu'**au moins un passage (7) est prévu dans au moins un des éléments à masse inerte (2), qui chemine le lubrifiant vers les trajectoires courbes (4).

2. Amortisseur selon la revendication 1, **caractérisé en ce qu'**une petite partie de la chambre (11) est remplie du lubrifiant.

3. Amortisseur selon la revendication 1 ou 2, **caractérisé en ce que** ledit au moins un passage (7) est ouvert en direction d'au moins une face (16).

4. Amortisseur selon la revendication 3, **caractérisé en ce que** ledit au moins un passage (7) est recouvert d'une paroi de la chambre (11) ou du moyeu (1), paroi qui est adjacente de telle manière à assurer l'étanchéité.

5. Amortisseur selon l'une des revendications 1 à 4, **caractérisé en ce que** le passage (7) est réalisé à la manière d'un canal.

6. Amortisseur selon l'une des revendications 1 à 5, **caractérisé en ce que** ledit au moins un passage (7) rompt la surface (8) extérieure, en sens radial, dudit au moins un élément à masse inerte (2) sous un angle aigu.

7. Amortisseur selon l'une des revendications 1 à 5, **caractérisé en ce que** ledit au moins un passage (7) rompt la surface (8) extérieure, en sens radial, dudit au moins un élément à masse inerte (2) sous un angle droit.

8. Amortisseur selon l'une des revendications 1 à 7, **caractérisé en ce que** ledit au moins un élément à masse inerte (2) comporte deux passages (7) et est de forme symétrique par rapport à un plan imaginaire (E) qui coupe une ligne (L) reliant les extrémités dudit élément à masse inerte (2) verticalement en son milieu.

9. Amortisseur selon l'une des revendications 1 à 8, **caractérisé en ce que** la surface extérieure (8) est bombée avec un rayon plus petit que la paroi de la chambre (11) lui faisant face.

10. Amortisseur selon l'une des revendications 1 à 9, **caractérisé en ce que** les ouvertures extérieures (17) des canaux de passage (7) sont agencées aux endroits de pression maximale du lubrifiant.

11. Amortisseur selon l'une des revendications 1 à 10, **caractérisé en ce que** ledit au moins un élément à masse inerte (2) est pourvu d'un canal principal (19) situé au centre et de deux canaux secondaires (20, 21) partant du canal central (19) et menant aux creux (12).

12. Amortisseur selon l'une des revendications 1 à 11, **caractérisé en ce que** des éléments à masse inerte (2) sont contigus axialement, des deux côtés, au moyeu (1).

13. Amortisseur selon l'une des revendications 1 à 11, **caractérisé en ce que** le moyeu (1) entoure les éléments à masse inerte (2) axialement des deux côtés.

14. Amortisseur selon la revendication 13, **caractérisé en ce que** le moyeu (1) est constitué essentiellement d'éléments en tôle emboutie.
